# EUROPEAN PATENT SPECIFICATION

(11) **EP 1 878 529 B1**
(45) Date of publication and mention of the grant of the patent: **19.08.2015**
(21) Application number: 07013464.8
(22) Date of filing: 10.07.2007
(51) Int. Cl.: B23K 11/31, B23K 37/04, B62D 65/06

(54) **Resistance welding device, particularly for welding portions of a motor vehicle body**
Widerstandsschweißvorrichtung, insbesondere zur Schweißung von Teilen einer Fahrzeugkarosserie
Dispositifs de soudage par résistance pour souder des parties d'un corps de moteur de véhicule

(30) Priority: 13.07.2006 IT TO20060509
(43) Date of publication of application: 16.01.2008
(73) Proprietor: KGR S.p.A., 10032 Brandizzo (Torino) (IT)
(72) Inventor: Simioli, Marco, 10040 Almese (Torino) (IT)
(74) Representative: Cian, Paolo

(56) References cited:
- FR-A1- 2 860 747
- JP-A- 5 285 668
- JP-A- 6 304 788
- JP-A- 11 099 494
- JP-A- 11 188 553
- US-A- 6 037 558

## Description

The present invention relates to a resistance welding device, particularly for welding portions of a motor vehicle body, comprising a robotized moving apparatus provided with a movable arm which supports a welding tool at one of its ends according to the preamble of claim 1.

US-6 037 588 A relates to a welding device comprising a welding tool that includes a movable electrode assembly mounted on a drive cylinder the housing of which is secured to a slidable plate supported on a fixed frame, so that the device is stationary mounted in its whole. The device extends along a linear direction and is associated with a separate side electrical contact gun that includes a respective electrode parallel to the movable electrode assembly. Furthermore, the device comprises a transformer stationarily mounted.

JP-6 304788 A discloses a movable positioning jig device for locking a work in a specific position and for moving the work in tree-dimensional positions by automatically controlled moving means including elevating and lowering means.

The known devices of the type defined above, typically comprise a resistance welding tool which is able to carry out one or more spot weldings. However, the tool needed for carrying out spot weldings is relatively complex arid heavy, and must be provided with a cooling system for cooling the electrodes. Moreover, spot weldings leave a visible mark on the welded sheet, which cannot be accepted on pieces that must be mounted in an in sight position, for example on the outer surface of a motor vehicle body.

With the aim of overcoming these drawbacks, the subject of the invention is a resistance welding device of the type defined in appended claim 1.

By virtue of these characteristics, the device of the invention is relatively light and little complex, and it is therefore particularly adapted to be associated with a robotized moving apparatus, such as a manipulating robot of the anthropomorphic type, and allows to make the so-called "invisible weldings" so that the welded piece, which appears to be perfectly intact from an aesthetic point of view, can be mounted in an in sight position.

According to a preferred feature of the invention, the device is intended to fix the components of a composite panel constituted by sheet elements, by means of indirect projection weldings, and it furthermore includes:
- a resting structure which comprises a plurality of support members for supporting the composite panel to be welded at a plurality of preselected welding zones,
- reference means associated with the resting structure, adapted to assure the correct mutual positioning of the sheet elements which constitute the composite panel, during the welding step, and
- at least one movable earth electrode, separated from said support members, for allowing to close, through the composite panel, the circuit for feeding current to the welding electrodes during the welding step.

By virtue of such features, the device of the invention has structure which is simple and little expensive with respect to that of the commonly used welding devices, so that it is particularly adapted to be used also for productions of small series.

The invention will be better clarified in the following detailed description, which has been made with reference to the appended drawings, provided only as a non-limitative example, in which:
- figure 1 is a schematic perspective view of a welding device according to a first embodiment of the invention,
- figure 2 is an enlarged view of a welding tool indicated by arrow II in figure 1,
- figure 3 is a schematic perspective view of a welding device according to another embodiment of the invention, which makes use of the welding tool of figure 2 and is particularly adapted to weld a composite panel,
- figure 4 is an enlarged view of a resting structure indicated by arrow IV in figure 3, in which a composite panel to be welded has been shown by dashed lines,
- figure 5 is an enlarged view of the welding tool indicated by arrow V of figure 3, and
- figure 6 is an enlarged view of a movable earth electrode associated with the resting structure of the device of the invention, from the side of arrow VI of figure 3.

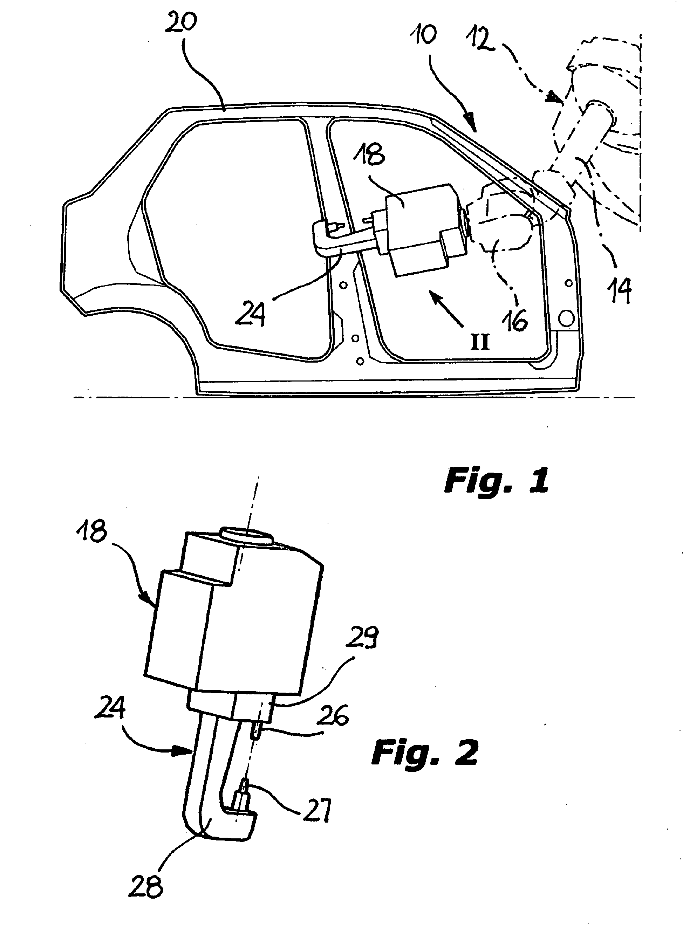

With initial reference to figures 1 and 2, a resistance welding device according to the invention, which can be used in particular to weld portions of a motor vehicle body by means of a projection welding process, is indicated in the whole by reference numeral 10.

A resistance projection, or relief, welding process, is typically carried out in order to fix to each other two sheet elements already preliminarily connected.

The device 10 of the invention comprises a robotized moving apparatus 12, conveniently an anthropomorphic manipulating robot of a type known per se, whose movable arm 14 allows the connection of a welding tool 18 adapted to carry out projection weldings, at one end 16 thereof. The moving apparatus 12 is susceptible to bring the tool 18, according to a sequence of programmed movements, at a plurality of zones of a piece to be welded, for example a side panel 20 of a motor vehicle body, in order to carry out respective direct projection weldings at such zones.

The body of the tool 18 comprises a C-shaped welding unit 24 provided with a pair of opposite and aligned electrodes 26 and 27, whose heads have respective contact surfaces, intended to come into contact with the opposite surfaces of the piece to be welded, which are substantially flat transverse to the general axis thereof. One of the electrodes, in particular the electrode 27, is supported by a hook-shaped or L-shaped electrode-holder arm 28, while the other electrode 26 extends from an electrode-holder 29 one portion of which is arranged inside the body of the tool 18.

The electrode-holder arms 28 and 29 are associated with a thrust compensation device of a type known per se, which allows the pressure applied from the unit 24 during the welding step to be evenly distributed on the two electrodes 27 and 26, such a compensation device being incorporated in the body of the tool 18. Moreover, a transformer (not shown in the figures), through which the current needed for carrying out the weldings is fed to the electrodes 26 and 27, is also provided in the same body.

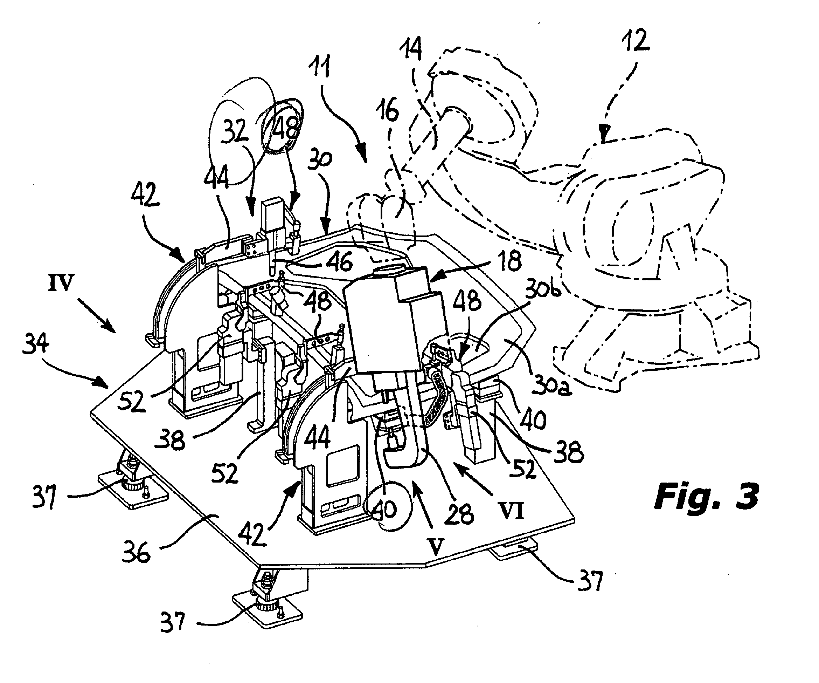

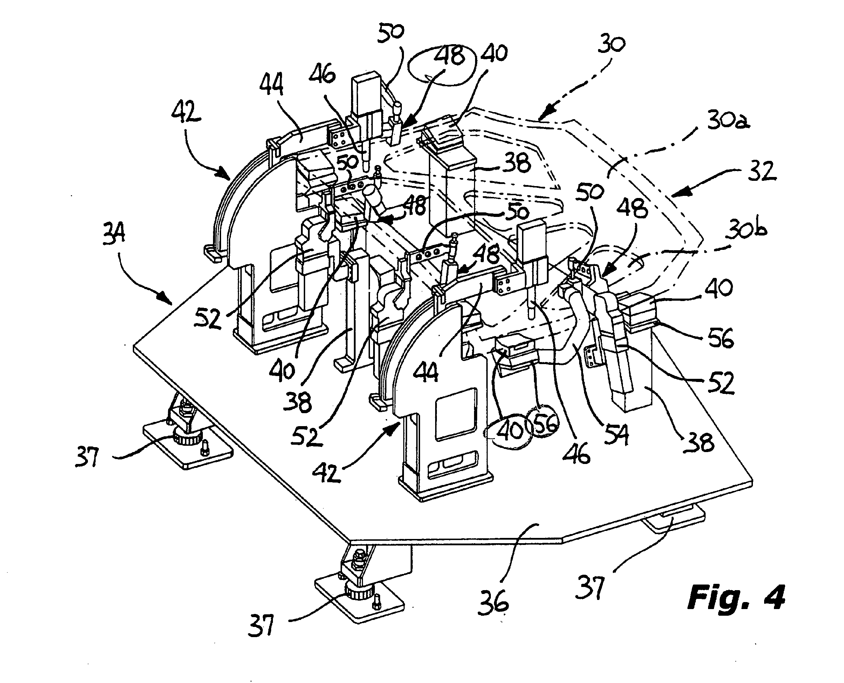

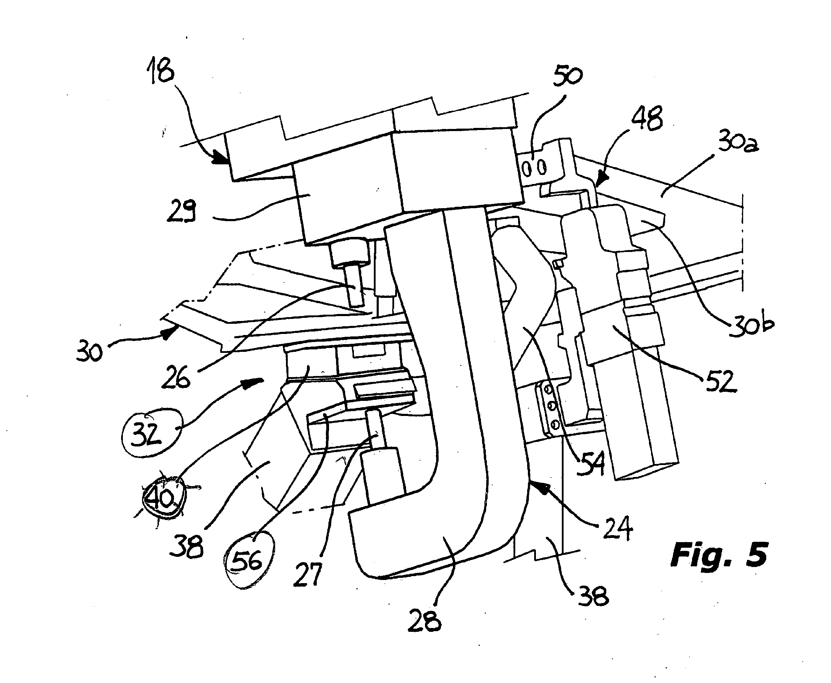

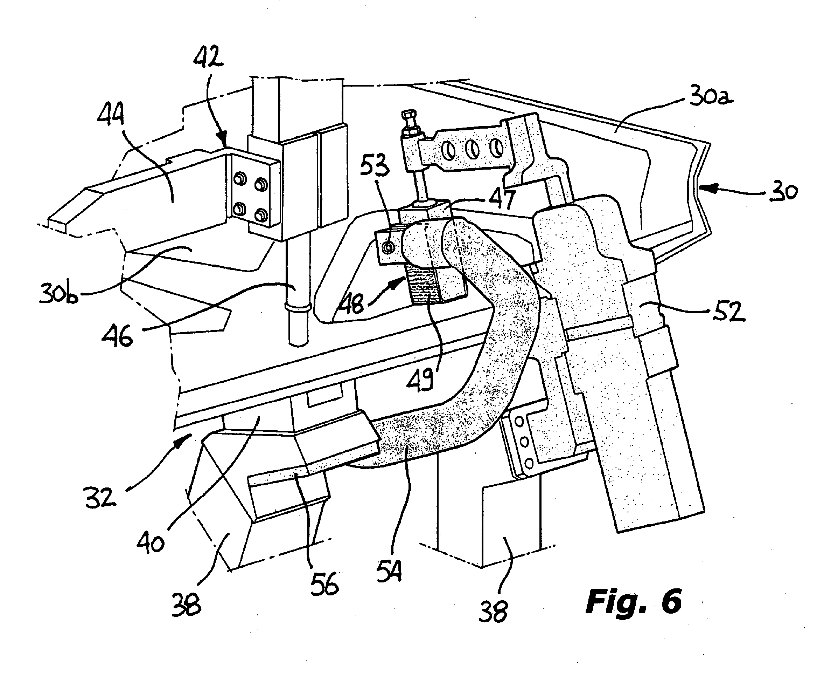

Another embodiment of the invention is shown in figures 3 to 6, where it is indicated as a whole by reference numeral 11, which is particularly adapted for carrying out weldings on a composite panel 30, for example the hatch of the front bonnet of a motor vehicle. The composite panel 30 comprises a pair of sheet elements already preliminarily connected by seaming of peripheral edges thereof, the edge of a first sheet element being provided with projections (not shown, being of a type known per se) and the edge of the second sheet element having a rim folded on the projections of the first element. In these figures, the elements equal or similar to those of the previous figures have been indicated by the same numeral references.

The panel 30 typically comprises a skeleton 30a, which performs the function of a supporting and resisting structure, and an outer covering panel 30b, having a shape function. In particular, a series of indentation-shaped projections are made along the edges of the skeleton 30a by means of indentation forming apparatuses of a type known per se, at which the projection weldings will have to be carried out. The edges of the covering panel 30b are folded in such a manner that a peripheral rim of the panel 30b overlaps the edge of the skeleton 30a, in order to preliminarily connect the elements 30a and 30b to each other by seaming.

Typically, a layer of polymeric adhesive, usually of the thermosetting type, is interposed between the edges of the elements 30a and 30b, whose polymerisation allows to firmly connect the elements 30a and 30b. In the most common case, the polymerisation of the adhesive takes place after the panel 30 has been mounted on the body of the relevant motor vehicle, during the so-called "hinged panels fitting" step, and after the whole body has been painted and heated to a temperature of about 200°C in order that cross-linking of the adhesive is reached.

The device 11 comprises again a robotized moving apparatus 12 for moving the welding tool 18, as a result of a sequence of programmed movements, at the zones of the panel 30 in which the indirect projection weldings will have to be carried out.

The device 11 includes also a resting structure 32, stationary mounted on a base 34 which comprises a platform 36 supported by adjustable feet 37 for resting on the ground.

A mounting 38 formed by a plurality of column members which support respective insulating blocks 40, for example of elastomeric material, is arranged on the platform 36. The insulating blocks 40 are so shaped as to correspond to the respective portion of the composite panel that will have to rest on them.

On the platform 36 are also arranged a pair of reference equipments 42, each of which comprises an arm 44 which can swing between a raised resting position and a lowered engagement position, the arm 44 being provided with a rod 46 adapted to be inserted into a centering hole of the composite panel 30 when the arm 44 is in its lowered position, in order to assure the correct mutual positioning of the elements 30a and 30b during the execution of the weldings.

The platform 36 supports also a plurality of movable earth electrodes, indicated by reference numeral 48, each of which is supported at the end of an arm 50 which can swing between a raised resting position and a lowered locking position in which the respective electrode 48 comes into contact with the composite panel 30, as a result of the driving of a clamping device 52 of the swingable arm type.

Each earth electrode 48 is usually constituted by a metallic plait 49 partially surrounding a metallic contact block 47 supported by a respective swingable arm 50. The metallic plait 49 is in turn connected, for example through a bolt 53 crossing the block 47, with a first end of a conductor 54, usually made by a flexible cable with a relatively large cross-section, preferably coated by an insulating sheath, whose second end is connected with a conductive plate 56 associated with each of the insulating blocks 40 at which the weldings of the composite panel 30 will have to be carried out, each plate 56 being separated and insulated with respect to the composite panel 30.

During the welding step carried out by the tool 18, the welding electrode 26 thereof is brought into contact with the outer surface of the rim of the covering panel 30b folded on the edge of the skeleton 30a, while the welding electrode 27 comes into contact with the conductive plate 56 arranged below the insulating block 40 at which a welding has to be carried out, so that, through the conductor 54 and the respective earth electrode 48 on the one hand, and through the composite panel 30 on the other hand, the circuit for feeding current to the welding electrodes 26 and 27 is closed while the weldings are carried out.

Both the reference equipments 42 and the clamping devices 52 of the swingable arm type are usually pneumatically or electrically driven and, in the raised position of the respective arms 44 and 50, they reach a retracted attitude with respect to the composite panel 30, in which the composite panel 30 can be put down or removed from above with respect to the resting structure 32.

The clamping devices 52 of the swingable arm type associated with the earth electrodes 48, in the configuration in which they come into contact with the composite panel 30, allow in particular to apply a pressure force on the panel 30, which is necessary to correctly carry out the weldings, in such a manner that they perform also a mutual locking function of the sheet elements 30a and 30b of the panel 30. This allows advantageously to avoid the use of further independent clamping devices in order to keep the sheet elements 30a and 30b in a mutual contact when the weldings are carried out, so that a cost reduction of the whole device can be achieved with respect to other previously known devices.

According to an alternative embodiment not shown in the figures, the device 11 of the invention can also be provided with induction heating means, adapted to generate a magnetic flow by a high frequency current in order to cause the elements 30a and 30b of the panel 30 to be heated by induction up to a pre-set temperature close to 180°C, for example of the type described in the Italian patent application TO2000A000803 in the name of the same Applicant. These heating means can be associated with the resting structure 32 in a position adjacent to the peripheral edge of the panel 30, where the aforesaid polymeric adhesive is interposed, in such a manner that it can reach a pre-polymerisation condition after the weldings are carried out, while the elements 30a and 30b of the panel 30 are still engaged by the reference equipments 42 and are locked by the movable earth electrodes 48 associated with the resting structure 32.

In the operation of the apparatus 11, a panel 30 with the relevant elements already seamed at their peripheral edges, is laid from above on the blocks 40. In this condition, the reference equipments 42 and the earth electrodes 48 are brought into the respective lowered positions so that the rods 46 of the reference equipments 42 engage the respective holes of the composite panel 30 and the earth electrodes 48 rest on the panel 30 for applying a pressure in order to keep the elements 30a and 30b of the panel 30 in contact, in their correct position for welding. The welding tool 18 is carried at the various blocks 40 by the moving apparatus 12, where a welding will be carried out by means of a current pulse coming from the transformer contained in the body of tool 18, until the welding of all the zones of panel 30 preselected to such an object will be obtained.

At the end of the welding step, and after the tool 18 has been moved away from the panel 30, the heating induction means can be activated, when they are provided for, in order that the adhesive interposed between the sheet elements 30a and 30b may reach the pre-polymerisation condition.

In any case, at the end of the fixing process of the sheet elements 30a and 30b, the reference equipments 42 and the earth electrodes 48 are brought into their respective raised positions in order to allow that the welded composite panel 30 can be removed from above, and that a new panel 30 to be welded can be positioned on the support structure 32.

## Claims

1. Resistance welding device, particularly for welding portions of a motor vehicle body, comprising a robotized moving apparatus (12) provided with a movable arm (14) which supports a welding tool (18) at one of its ends (16), said welding tool (18) being intended to carry out projection weldings at a plurality of zones of a piece (20; 30) to be welded, at which it is brought by said apparatus (12), and including a body from which a welding C-shaped unit (24) extends, which is provided with a pair of opposite and aligned welding electrodes (26, 27) to which welding current is fed by a transformer contained in the body of the tool (18), further comprising
- a resting structure (32) comprising a plurality of support members (40) so shaped as to correspond to respective portions of the composite panel (30) to be welded, for supporting the composite panel (30) at a plurality of preselected welding zones, **characterized in that** said device is intended to carry out indirect projection weldings on the components (30a, 30b) of a composite panel (30) consisting of sheet elements, and **in that** the support members (40) consist of blocks (40) of an insulating material and include a conductive plate (56) insulated from the composite panel (30) and intended to be engaged by one welding electrode (27) of the welding tool (18) while a welding is carried out, the other welding electrode (26) of the welding tool (18) being intended to contact the composite panel (30) at its side opposite to said conductive plate (56),
- at least one movable earth electrode (48), separated from said welding tool (18) and from said support members (40), and adapted to rest on the composite panel (30), to which one end of a flexible conductor (54) is connected, the other end of which is electrically connected with at least one conductive plate (56) of said support members (40), to allow the current circuit of the welding electrodes (26, 27) to be closed during the welding step through the composite panel (30).

2. Device according to claim 1, **characterized in that** the head of at least a welding electrode (26, 27) has a contact surface intended to come into contact with the portion to be welded (20; 30), which is substantially flat transverse to the general axis thereof.

3. Device according to claim 1 or 2, **characterized in that** it comprises reference means (42, 46) associated with said resting structure (32), which are adapted to assure a correct mutual positioning of the sheet elements (30a, 30b) of the composite panel (30) during the welding step.

4. Device according to any one of claims 1 to 3, **characterized in that** said flexible conductor (54) is a metallic cable coated by an insulating sheath, which extends between a respective conductive plate (56) and a metallic body (49) fixed to a contact block (47) of a movable earth electrode (48).

5. Device according to any one of claims 1 to 4, **characterized in that** said welding electrodes (26, 27) are connected to respective electrode-holder arms (28, 29) of said welding tool (18), to which thrust compensation means are associated to determine, on the two electrodes (26, 27), an even distribution of the pressure applied during the welding step, such compensation means being incorporated in the body of the tool (18).

6. Device according to any one of claims 1 to 5, **characterized in that** the composite panel (30) comprises a skeleton (30a) and a covering panel (30b) preassembled by seaming portions of their peripheral edges.

7. Device according to any one of claims 1 to 6, **characterized in that** each movable earth electrode (48) is susceptible to apply a pressure force on the composite panel (30) in its configuration into contact with the composite panel (30), so that it performs also a mutual locking function of the components (30a, 30b) of the composite panel (30).

8. Device according to any one of claims 1 to 7, **characterized in that** a polymeric adhesive is arranged between edge portions of the composite panel (30) to be welded, and **in that** induction heating means are associated with the support structure (32), which are adapted to induce a pre-set temperature in the portions of the composite panel (30) at which the said adhesive is present, in order that a pre-polymerisation condition of said adhesive is attained while the elements of the panel (30) are engaged by said reference means (42, 46) and are locked by the movable earth electrodes (48) associated with said support structure (32).

## Patentansprüche

1. Widerstandsschweißvorrichtung, insbesondere zur Schweißung von Teilen einer Fahrzeugkarosserie, umfassend eine Robotereinrichtung (12) mit einem beweglichen Arm (14), der an einem Ende (16) ein Schweißwerkzeug (18) trägt, das dazu dient, in einer Mehrzahl von Bereichen (20; 30) eines zu verschweißenden Werkstücks, in die es von der Robotereinrichtung (12) gebracht worden ist, Buckelschweißungen durchzuführen, und das einen Körper hat, von dem sich eine C-förmige Schweißeinheit (24) erstreckt, die zwei einander gegenüberliegende und miteinander fluchtende Schweißelektroden (26, 27) aufweist, die über einen im Körper des Schweißwerkzeugs (18) untergebrachten Transformator mit einem Schweißstrom versorgt werden, ferner umfassend eine Stützeinrichtung (32) mit einer Mehrzahl von Tragelementen (40), deren Form den entsprechenden Bereichen der zusammengesetzten, zu verschweißende Blechtafel (30) entspricht und die diese in einer Mehrzahl von vorbestimmten Schweißzonen abstützen, **dadurch gekennzeichnet, dass** die Vorrichtung so ausgebildet ist, dass sie an den Komponenten (30a, 30b) einer aus Blechelementen zusammengesetzten Tafel (30) indirekte Buckelschweißungen durchführt, und dass die Tragelemente (40) aus Blöcken (40) aus isolierendem Material und einer leitenden Platte (56) bestehen, die gegen die zusammengesetzte Platte (30) isoliert und so ausgebildet ist, dass sie beim Schweißvorgang in Eingriff mit einer Schweißelektrode (27) des Schweißwerkzeugs (18) kommt, während die andere Schweißelektrode (26) des Schweißwerkzeugs (18) dazu dient, in Kontakt mit der zusammengesetzten Tafel (30) auf der der leitenden Platte (56) gegenüberliegenden Seite zu kommen, und dass wenigstens eine bewegliche Masseelektrode (48) vorgesehen ist, die von dem Schweißwerkzeug (18) und von den Tragelementen (40) getrennt ist und die dazu dient, dass sie sich auf der zusammengesetzten Tafel (30) abstützt, mit der ein Ende eines flexiblen Leiters (54) verbunden ist, dessen anderes Ende mit wenigstens einer leitenden Platte (56) der Tragelemente (40) elektrisch verbunden ist, so dass der Stromkreis der Schweißelektroden (26, 27) während des Schweißvorgangs durch die zusammengesetzte Platte (30) geschlossen ist.

2. Vorrichtung nach Anspruch 1, **dadurch gekennzeichnet, dass** der Kopf wenigstens einer Schweißelektrode (26, 27) eine Kontaktfläche hat, die dazu dient, in Kontakt mit dem zu schweißenden Bereich (20; 30) zu kommen und die im wesentlichen flach ist und quer zur eigenen Hauptachse verläuft.

3. Vorrichtung nach Anspruch 1 oder 2, **dadurch gekennzeichnet, dass** der Stützeinrichtung (32) Referenzmittel (42, 46) zugeordnet sind, die eine korrekte gegenseitige Positionierung der Komponenten (30a, 30b) der zusammengesetzten Blechtafel (30) während des Schweißvorganges gewährleisten.

4. Vorrichtung nach einem der Ansprüche 1 bis 3, **dadurch gekennzeichnet, dass** der flexible Leiter (54) aus einem metallischem Kabel mit einer isolierenden Ummantelung besteht, das sich zwischen einer zugeordneten, leitenden Platte (56) und einem Metallkörper (49) erstreckt, der an einem Kontaktblock (47) der beweglichen Masseelektrode (48) befestigt ist.

5. Vorrichtung nach einem der Ansprüche 1 bis 4, **dadurch gekennzeichnet, dass** die Schweißelektroden (26, 27) mit entsprechenden Elektroden-Haltearmen (28, 29) des Schweißwerkzeugs (18) verbunden sind, denen Schubausgleichsmittel zugeordnet sind, die an den beiden Elektroden (26, 27) eine gleichförmige Verteilung des beim Schweißen ausgeübten Druckes gewährleisten und die in dem Körper des Schweißwerkzeugs (18) eingebettet sind.

6. Vorrichtung nach einem der Ansprüche 1 bis 5, **dadurch gekennzeichnet, dass** die zusammengesetzte Tafel (30) ein Skelett (30a) mit einer Deckplatte (30b) umfasst, die an ihren umlaufenden Kanten durch Falze miteinander verbunden sind.

7. Vorrichtung nach einem der Ansprüche 1 bis 6, **dadurch gekennzeichnet, dass** jede bewegliche Masseelektrode (48) in ihrer Kontaktstellung mit der zusammengesetzten Tafel eine Druckkraft auf diese ausübt, wodurch sie auch eine gegenseitige Klemmfunktion der Komponenten (30a, 30b) der zusammengesetzten Tafel (30) ausübt.

8. Vorrichtung nach einem der Ansprüche 1 bis 7, **dadurch gekennzeichnet, dass** zwischen die Kantenabschnitte der zu verschweißenden zusammengesetzten Tafel ein Polymerklebstoff eingebracht ist und dass der Stützeinrichtung (32) Induktionsheizmittel zugeordnet sind, um eine vorbestimmte Temperatur in den mit Klebstoff versehenen Abschnitten der zusammengesetzten Tafel (30) zu erzeugen, so dass der Klebstoff eine Vorpolymerisation erfährt, während die Komponenten der Tafel (30) durch die Referenzmittel (42, 46) miteinander in Eingriff sind und durch die beweglichen Masseelektroden (48), die mit der Stützeinrichtung (32) verbunden sind, verklemmt werden.

## Revendications

1. Dispositif de soudage par résistance, en particulier pour le soudage des parties d'une carrosserie de véhicule automobile, comprenant un appareil mobile robotisé (12) pourvu d'un bras mobile (14) qui supporte un outil de soudage (18) à l'une de ses extrémités (16), ledit outil de soudage (18) étant destiné à effectuer des soudures à bossages en une pluralité de zones d'une pièce (20, 30) à souder, vers laquelle il est amené par ledit appareil (12), et comprenant un corps à partir duquel s'étend une unité de soudage (24) en forme de C, qui est pourvue d'une paire d'électrodes de soudage (26, 27) en vis-à-vis et alignées, auxquelles un courant de soudage est amené par un transformateur contenu dans le corps de l'outil (18), comprenant en outre
- une structure d'appui (32) comprenant une pluralité d'éléments de support (40) conformés de manière à correspondre à des parties respectives du panneau composite (30) à souder, pour supporter le panneau composite (30) en une pluralité de zones de soudage présélectionnées, **caractérisé en ce que** ledit dispositif est destiné à effectuer des soudures à bossages indirectes sur les composants (30a, 30b) d'un panneau composite (30) constitué d'éléments en feuille, et **en ce que** les éléments de support (40) sont constitués de blocs (40) en un matériau isolant et comprennent une plaque conductrice (56) isolée vis-à-vis du panneau composite (30) et destinée à être engagée par une électrode de soudage (27) de l'outil de soudage (18), alors qu'une soudure est réalisée, l'autre électrode de soudage (26) de l'outil de soudage (18) étant destinée à venir en contact avec le panneau composite (30) sur son côté opposé à ladite plaque conductrice (56),
- au moins une électrode de masse mobile (48), séparée dudit outil de soudage (18) et desdits éléments de support (40), et adaptée pour s'appuyer sur le panneau composite (30), à laquelle une extrémité d'un conducteur flexible (54) est connectée, son autre extrémité étant connectée électriquement à au moins une plaque conductrice (56) desdits éléments de support (40), pour permettre au circuit de courant des électrodes de soudage (26, 27) d'être fermé pendant l'étape de soudage à travers le panneau composite (30).

2. Dispositif selon la revendication 1, **caractérisé en ce que** la tête d'au moins une électrode de soudage (26, 27) présente une surface de contact destinée à venir en contact avec la partie (20, 30) à souder, qui est sensiblement plate et transversale à l'axe général de celle-ci.

3. Dispositif selon la revendication 1 ou la revendication 2, **caractérisé en ce qu'**il comprend des moyens de référence (42, 46) associés à ladite structure (32) d'appui, qui sont adaptés pour assurer un positionnement mutuel correct des éléments en feuille (30a, 30p) du panneau composite (30) pendant l'étape de soudage.

4. Dispositif selon l'une quelconque des revendications 1 à 3, **caractérisé en ce que** ledit conducteur souple (54) est un câble métallique revêtu d'une gaine isolante, qui s'étend entre une plaque conductrice respective (56) et un corps métallique (49) fixé à un bloc de contact (47) d'une électrode de masse mobile (48).

5. Dispositif selon l'une quelconque des revendications 1 à 4, **caractérisé en ce que** lesdites électrodes de soudage (26, 27) sont reliées à des bras porte-électrode (28, 29) respectifs dudit outil de soudage (18), auxquels des moyens de poussée de compensation sont associés pour déterminer, sur les deux électrodes (26, 27), une répartition uniforme de la pression appliquée lors de l'étape de soudage, de tels moyens de compensation étant incorporés dans le corps de l'outil (18).

6. Dispositif selon l'une quelconque des revendications 1 à 5, **caractérisé en ce que** le panneau composite (30) comprend un squelette (30a) et un panneau de recouvrement (30b) préassemblés par des parties de jointure de leurs bords périphériques.

7. Dispositif selon l'une quelconque des revendications 1 à 6, **caractérisé en ce que** chaque électrode de masse mobile (48) est susceptible d'appliquer une force de pression sur le panneau composite (30) dans sa configuration en contact avec le panneau composite (30), de sorte qu'il assure également une fonction de verrouillage mutuel des composants (30a, 30b) du panneau composite (30).

8. Dispositif selon l'une quelconque des revendications 1 à 7, **caractérisé en ce qu'**un adhésif polymérique est disposé entre les parties de bord du panneau composite (30) à souder, et **en ce que** des moyens de chauffage par induction sont associés à la structure de support (32), qui sont adaptés pour induire une température préréglée dans les parties du panneau composite (30) dans lesquelles ledit adhésif est présent, afin qu'une condition de pré-polymérisation dudit adhésif soit atteinte, alors que les éléments du panneau (30) en engagement avec lesdits moyens de référence (42, 46) et sont bloqués par les électrodes de masse mobile (48) associées à ladite structure de support (32).
